# EUROPÄISCHE PATENTSCHRIFT

(11) **EP 2 156 040 B1**
(45) Veröffentlichungstag und Bekanntmachung des Hinweises auf die Patenterteilung: **26.03.2014**
(21) Anmeldenummer: 08759282.0
(22) Anmeldetag: 18.06.2008
(51) Int. Cl.: F02F 7/00, F16M 1/024

(54) **EINTEILIG GEGOSSENES KURBELGEHÄUSE FÜR EINEN MEHRZYLINDERMOTOR**
CRANKCASE CAST IN ONE PIECE FOR A MULTI-CYLINDER ENGINE
CARTER MOTEUR MOULÉ D'UNE SEULE PIÈCE POUR UN MOTEUR À PLUSIEURS CYLINDRES

(30) Priorität: 20.06.2007 DE 102007028186
(43) Veröffentlichungstag der Anmeldung: 24.02.2010
(73) Patentinhaber: Motorenfabrik Hatz GmbH & Co. KG, 94099 Ruhstorf (DE)
(72) Erfinder: EDER, Erich, 94152 Neuhaus/Inn (DE)
(74) Vertreter: Grättinger Möhring von Poschinger Patentanwälte Partnerschaft
(86) Internationale Anmeldenummer: PCT/EP2008/004892
(87) Internationale Veröffentlichungsnummer: WO 2008/155102

(56) Entgegenhaltungen:
- DE-A1- 2 634 333
- GB-A- 269 713
- JP-A- 61 109 908

## Beschreibung

Die vorliegende Erfindung betrifft ein einteilig gegossenes Kurbelgehäuse für einen Mehrzylindermotor, insbesondere einen Mehrzylinder-Dieselmotor, nach dem Oberbegriff von Anspruch 1.

Derartige Kurbelgehäuse sind im Stand der Technik weit verbreitet. Die in das Kurbelgehäuse einzusetzende Kurbelwelle wird üblicherweise in horizontaler Lage von unten in das unterseitig offene Kurbelgehäuse eingesetzt und auf der so genannten Schwungradseite des Kurbelgehäuses an einem ihrer Wellenenden mit einem die Drehschwingungen der Kurbelwelle reduzierenden Schwungrad ausgestattet. Die der Schwungradseite gegenüberliegende Seite des Kurbelgehäuses wird als Steuerseite bezeichnet und weist üblicherweise eine offene Kontur bzw. großflächige Öffnungen oder Durchbrechungen auf. Zu deren Abdeckung ist im Stand der Technik ein separater, an das Kurbelgehäuse steuerseitig anzubringender Steuerdeckel vorgesehen. Unterhalb von Kurbelgehäuse und von dem hieran seitlich anschließenden Steuerdeckel wird üblicherweise eine Ölwanne zur Aufnahme des Ölsumpfs angebracht, wozu auf der Unterseite von Kurbelgehäuse und Steuerdeckel entsprechende Flanschabschnitte zur Anbringung und Abdichtung der Ölwanne vorgesehen sind. Als problematisch erweist sich dabei insbesondere die Abdichtung der Ölwanne im Bereich von Übergangsabschnitten der einzelnen Flanschabschnitte, insbesondere jedoch auch in demjenigen Bereich, in welchem Ölwanne, Kurbelgehäuse und Steuerdeckel an einer T-artigen Stoßfläche aufeinander treffen.

Bei einem aus GB 269713 bekannten Kurbelgehäuse ist ebenfalls ein vollumfänglich durchgehender, in einer Ebene verlaufender Flansch für den Anschluss der Ölwanne vorgesehen. Die Montage der Kurbelwelle erfolgt hier durch Einführen derselben durch eine Wandöffnung in der der Steuerseite des Motors gegenüberliegenden Seitenwand des Kurbelgehäuses. Die Höhe des Kurbelgehäuses ist nach der Größe dieser Wandöffnung, durch welche die komplette Kurbelwelle hindurch passt, zu bemessen. Beide Enden der Kurbelwelle sind in Lagerbüchsen gegenüberliegender Deckelteile gelagert, welche derartige Wandöffnungen in beiden Seitenwänden des Kurbelgehäuses dichtend verschließen.

Ausgehend von dem vorstehend erläuterten Stand der Technik ist es die Aufgabe der vorliegenden Erfindung, ein einteilig gegossenes Kurbelgehäuse der eingangs genannten Art bereit zu stellen, mit welchem unter gleichzeitiger Kosteneinsparung eine einfachere Bauweise des hiermit auszustattenden Mehrzylindermotors ermöglicht wird, wobei insbesondere die vorstehend erläuterte Abdichtungsproblematik vermieden sein soll.

Diese Aufgabe wird mit einem Kurbelgehäuse der eingangs genannten Art nach dem Kennzeichen von Anspruch 1 gelöst.

Dadurch, dass das Kurbelgehäuse erfindungsgemäß auf seiner Steuerseite bis auf eine einzige Bohrung vollständig geschlossen ist, kann auf ein separates Steuergehäuse verzichtet werden, was eine nicht unerhebliche Kosteneinsparung mit sich bringt. Eine wie auch immer geartete Abdichtung zwischen einem Steuergehäuse und dem Kurbelgehäuse ist somit nicht erforderlich.

Die Abdichtung der zur Durchführung der Kurbelwelle im Kurbelgehäuse vorgesehenen Bohrung ist erfindungsgemäß dergestalt realisiert, dass das Kurbelgehäuse außenseitig eine die Bohrung vollumfänglich umschließende Dichtfläche bereitstellt, gegen die eine korrespondierende Dichtfläche des Gehäuses eines am Kurbelgehäuse anzubringenden Motoraggregats, insbesondere des Pumpengehäuses der von der Kurbelwelle angetriebenen Ölpumpe dicht anliegt.

Infolge des auf der Unterseite des Kurbelgehäuses vollumfänglich umlaufenden Flansches sind erfindungsgemäß besondere Maßnahmen getroffen, um das Einsetzen der Kurbelwelle in ihre Aufnahme im Kurbelgehäuse bei der Montage des Motors zu ermöglichen.

Prinzipiell könnte dabei eine in ihrer Längsachse teilbare Kurbelwelle Verwendung finden, die durch die vom Flansch auf der Unterseite des Kurbelgehäuses gebildete Öffnung in zwei später zu verbindenden Teilen leicht einsetzbar wäre. Jedoch wird erfindungsgemäß aus Stabilitätsgründen die Verwendung einer einteilig hergestellten Kurbelwelle vorgeschlagen, wobei die steuerseitig zur Durchführung des steuerseitigen Wellenendes der Kurbelwelle vorgesehene Bohrung im Kurbelgehäuse in ihrem Durchmesser bzw. ihrer Formgebung derart bemessen ist, dass die Kurbelwelle in Schräglage in die Bohrung ein- bzw. mit ihrem Wellenende hindurchgeführt werden kann. Die Kurbelwelle ist dabei zu Montagezwecken in Schräglage zu bringen, weil die lichte Weite der vom Flansch gebildeten Öffnung auf der Unterseite des Kurbelgehäuses nicht ausreichend ist, um die Kurbelwelle in horizontaler Ausrichtung vertikal durch diese Öffnung hindurchzuführen.

Schließlich kann bei einem erfindungsgemäßen Kurbelgehäuse ergänzend vorgesehen sein, dass das einteilig gegossene Kurbelgehäuse auch das Gehäuse eines Abgasrückführungskühlers bildet, womit weitere im Stand der Technik erforderliche Abdichtungen zu einem ansonsten separat herzustellenden und anzubringenden Gehäuse eines handelsüblichen AGR-Kühlers vermieden werden können. Zudem kann dann die erforderliche Anbindung des Abgasrückführungskühlers an den Kühlflüssigkeitskreislauf des Motors durch vollständig in das einteilig gegossene Kurbelgehäuse integrierte Wasserkanäle erfolgen. Der - je nach Motorauslegung - zu kühlende Teilstrom des gesamten Abgases kann dabei in einfacher Weise in einem rostfreien Stahlrohr geführt werden, welches mit dem Abgasaustritt des Motors verbunden, durch das das Gehäuse des AGR-Kühlers bildende Kurbelgehäuse hindurchgeführt und dabei von Kühlwasser umspült wird. So lässt sich im Übrigen auch eine besonders effektive Abgasrückführungskühlung realisieren, da hierbei kein Teilstrom des Kühlwassers zu einem separaten AGR-Kühler abgezweigt und wieder zurückgeführt werden muss, sondern vorzugsweise die gesamte Kühlwassermenge unmittelbar nach dem Austritt aus der Wasserpumpe durch den im Kurbelgehäuse integrierten Abgasrückführungskühler geleitet werden kann.

Die vorliegende Erfindung betrifft im Übrigen nicht nur ein Kurbelgehäuse der vorstehend erläuterten Art, sondern auch einen Mehrzylinder-(Diesel-)Motor mit einem Kurbelgehäuse der vorstehend erläuterten Art. Nachfolgend wird die Erfindung anhand des in der Zeichnung dargestellten Ausführungsbeispiels näher erläutert.

Dabei zeigen
- Fig. 1 - 3: ein Ausführungsbeispiel eines erfindungsgemäßen Kurbelgehäuses aus verschiedenen Perspektiven und
- Fig. 4: ein Ausführungsbeispiel eines erfindungsgemäßen Dieselmotors mit einem erfindungsgemäßen Kurbelgehäuse.

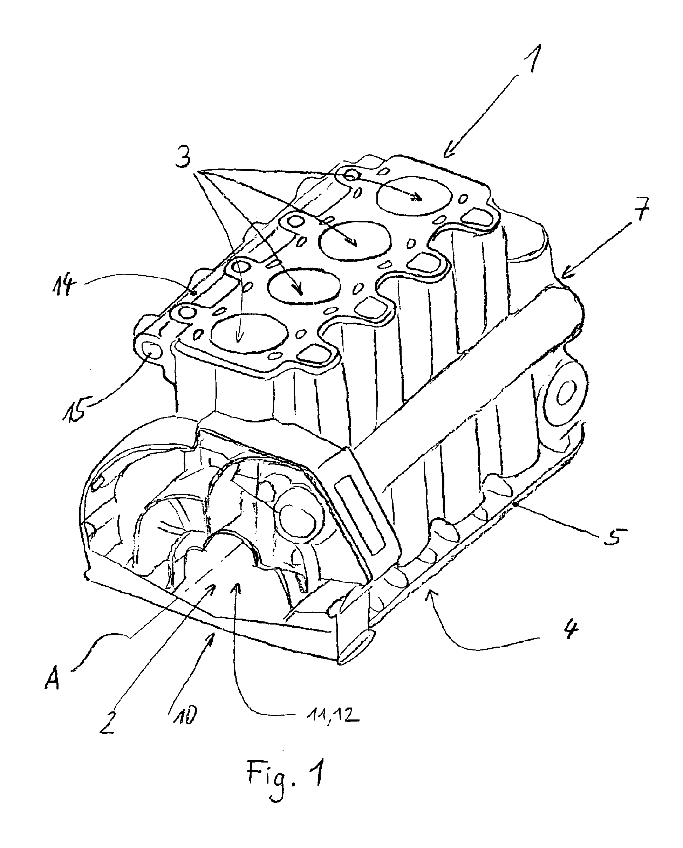

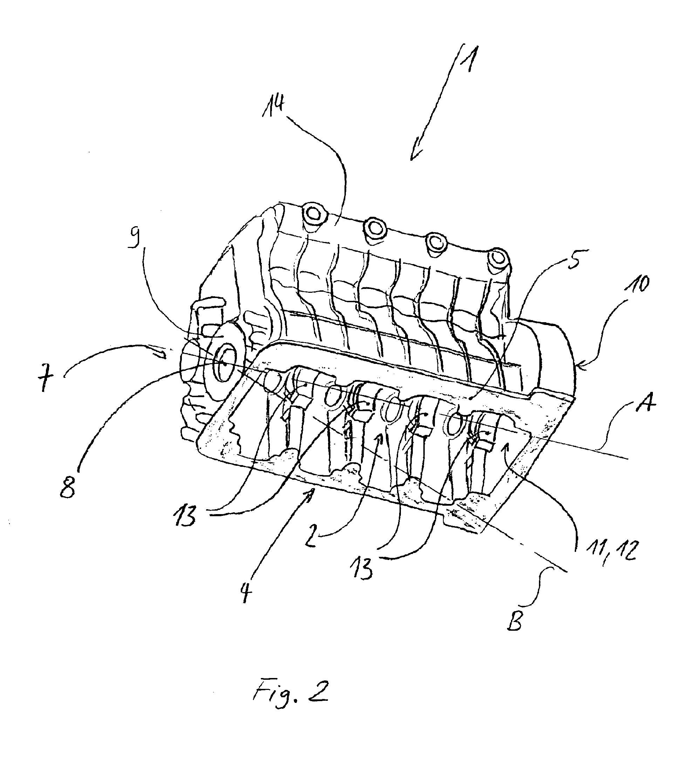

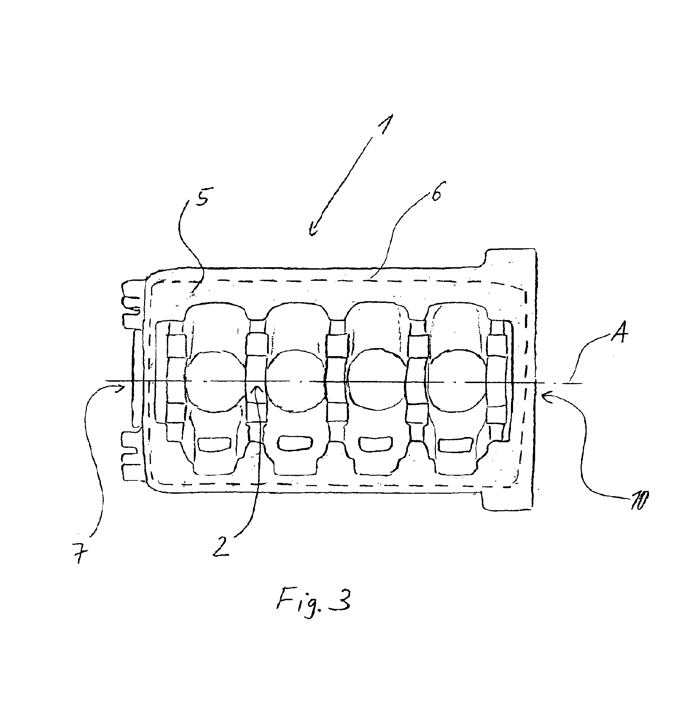

Das in den Fig. 1 bis 3 aus verschiedenen Perspektiven, nämlich in Fig. 1 aus schwungradseitiger Sicht von schräg oben, in Fig. 2 aus steuerseitiger Sicht von schräg unten und in Fig. 3 von unten dargestellte Kurbelgehäuse 1 ist einteilig gegossen und für einen 4-Zylinder-Dieselmotor bestimmt. Das Kurbelgehäuse 1 umfasst eine Aufnahme 2 für eine längs der Achse A horizontal verlaufende Kurbelwelle (nicht dargestellt) und insgesamt vier Zylinderbohrungen 3. Auf seiner Unterseite 4 ist das Kurbelgehäuse mit einem vollständig umlaufenden, nicht unterbrochenen Flansch 5 zum Anbau einer Ölwanne ausgestaltet, so dass die - in den Fig. 1 bis 3 nicht dargestellte - Ölwanne längs des Flansches 5 an das Kurbelgehäuse angebaut, mittels geeigneter Befestigungsmittel daran befestigt und längs einer umlaufenden Dichtlinie 6 (gestrichelt in Fig. 2 dargestellt) gegen das Kurbelgehäuse 1 abgedichtet werden kann. Die Dichtlinie 6 verläuft zusammen mit dem Flansch 5 in einer exakt horizontalen Ebene. Auf der Steuerseite 7 ist das Kurbelgehäuse 1 mit Ausnahme einer ein Ende der Kurbelwelle aufnehmenden Bohrung 8 vollständig geschlossen, so dass auf ein separates Steuergehäuse verzichtet werden kann. Die Bohrung 8 ist vollumfänglich von einer Dichtfläche 9 des Kurbelgehäuses 1 umlaufen, mit welcher bei montiertem Motor eine Dichtfläche des Gehäuses einer von dem steuerseitigen Ende der Kurbelwelle angetriebenen Ölpumpe (in den Fig. 1 bis 3 nicht dargestellt) dichtend zusammenwirkt. Die der Steuerseite 7 gegenüberliegenden Schwungradseite 10 des Kurbelgehäuses 1 dient als Hauptabtriebsseite eines mit dem erfindungsgemäßen Kurbelgehäuse 1 ausgestatteten Dieselmotors. Die für die Kurbelwelle 1 vorgesehene Aufnahme 2 grenzt daher schwungradseitig an entsprechende Aufnahmen 11, 12 für das Schwungrad und das Abtriebszahnrad an (beide nicht dargestellt).

Die Bohrung 8 auf der Steuerseite 7 des Kurbelgehäuses 1 weist einen größeren Durchmesser als die Kurbelwelle auf, so dass die Kurbelwelle in Schräglage längs der in Fig. 2 dargestellten Achse B mit ihrem steuerseitigen Wellenende - durch die vom Flansch 6 auf der Unterseite des Kurbelgehäuses 1 gebildete Öffnung hindurch - in die Bohrung 8 eingeführt und anschließend - berührungslos in ihre horizontale Lage innerhalb der Lagerstühle 13 gemäß Achse A verschwenkt werden kann. Anschließend wird zwischen Kurbelwelle und Bohrung 8 ein geeigneter Lagerring installiert. Neben der Kurbelwelle und ihrer Aufnahme 2 innerhalb der Lagerstühle 13 sind auch das Schwungrad und das abtriebsseitige Zahnrad sowie die hierfür vorgesehenen Aufnahmen 11, 12 so dimensioniert, dass die zum Ein- und Ausbau der Kurbelwelle notwendige Schwenkbewegung durchführbar ist.

Schließlich ist seitlich am Kurbelgehäuse 1 auch das einteilig mit dem Kurbelgehäuse 1 gegossene Gehäuse 14 eines Abgasrückführungskühlers vorgesehen, in welches durch eine schwungradseitig vorzusehende Bohrung 15 ein rostfreies Stahlrohr (nicht dargestellt) parallel zur Kurbelwellenachse A als Abgasrückführungskanal eingeführt wird, welches dann innerhalb des Gehäuses 14 von Kühlwasser umströmt wird.

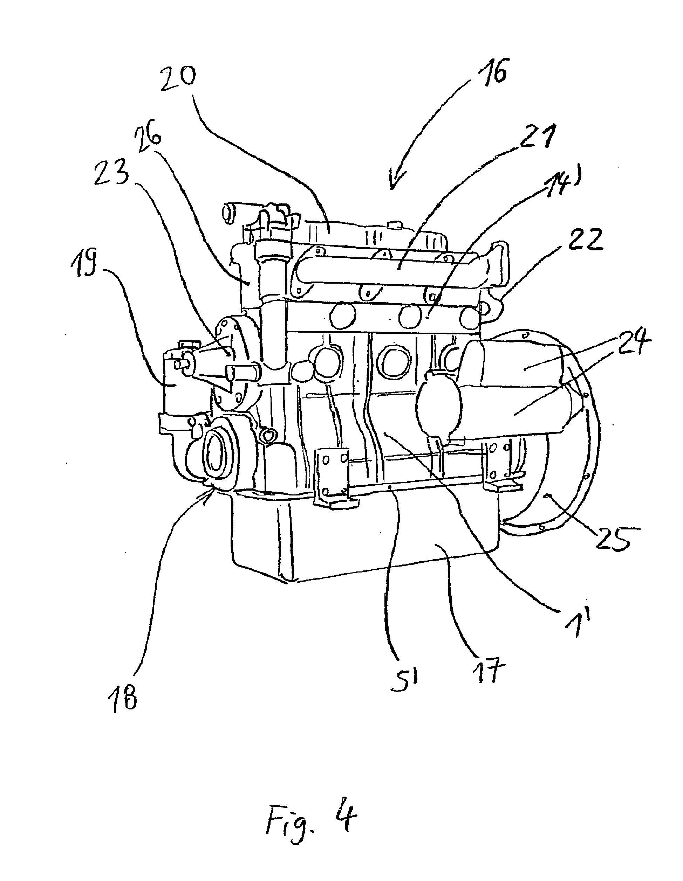

Fig. 4 zeigt schließlich einen teilmontierten 3-Zylinder-Dieselmotor 16 in perspektivischer Ansicht, welcher mit einem erfindungsgemäßen Kurbelgehäuse 1' ausgestattet ist. Da das Kurbelgehäuse 1' mit Ausnahme der Zylinderzahl in den erfindungswesentlichen Merkmalen mit dem Kurbelgehäuse 1 aus den Fig. 1 bis 3 über-einstimmt, sei diesbezüglich auf die auch insoweit gültigen Ausführungen in Zusammenhang mit dem Ausführungsbeispiel des erfindungsgemäßen Kurbelgehäuses 1 gemäß Fig. 1 bis 3 verwiesen.

Auf der Unterseite des Kurbelgehäuses 1' ist bei dem Dieselmotor 16 aus Fig. 4 eine Ölwanne 17 angebaut, welche gegen einen vollständig umlaufenden, nicht unterbrochenen und in einer horizontalen Ebene verlaufenden Flansch 5' des Kurbelgehäuses 1' abgedichtet ist. Auf der Steuerseite des Dieselmotors 16 ist im Bereich der - hier nicht sichtbaren - Bohrung für die Kurbelwelle eine von der Kurbelwelle betriebene Ölpumpe 18 angebaut, die an ihrem Gehäuse mit einer umlaufenden Dichtfläche gegen eine die Bohrung umlaufende Dichtfläche des Kurbelgehäuses 1' abgedichtet ist. Ferner ist steuerseitig auch der Ölfilter 19 installiert. An die Oberseite des Kurbelgehäuses ist ein Zylinderkopf 26 geschraubt, dessen Ventiltrieb durch einen Zylinderkopfdeckel 20 verschlossen ist. Von dem aus den Abgasauslasskanälen der einzelnen Zylinder durch den Abgaskrümmer 21 in Richtung Auspuff strömenden Abgas wird mittels der Abgasanzapfungsleitung 22 ein Teilstrom des Abgases abgezweigt. Die Abgasanzapfungsleitung 22 ist mit einem innerhalb des Gehäuses 14' des Abgasrückführungskühlers verlaufenden Stahlrohr verbunden. Das Kühlwasser für den Abgasrückführungskühler strömt unmittelbar nach dem Austritt aus der steuerseitig am Kurbelwellengehäuse 1' angeflanschten Wasserpumpe 23 in dessen Gehäuses 14'. Ferner sind am Kurbelgehäuse 1' ein Starter 24 und ein für Industrie-Dieselmotoren übliches Anschlussgehäuse 25 angebracht.

## Patentansprüche

1. Einteilig gegossenes Kurbelgehäuse (1, 1') für einen Mehrzylindermotor (16), insbesondere einen Mehrzylinder-Dieselmotor, mit einer Aufnahme (2) für eine horizontal verlaufende Kurbelwelle sowie mehreren Zylinderbohrungen (3), welches auf seiner Unterseite einen vollständig umlaufenden, nicht unterbrochenen Flansch (5, 5') zum Anbau einer Ölwanne (17) aufweist und wobei die Kurbelwelle bei der Montage des Motors in das Kurbelgehäuse einführbar ist,
**dadurch gekennzeichnet,**
**dass** das Kurbelgehäuse (1, 1') auf seiner der Schwunggradseite gegenüberliegenden Steuerseite (7) mit Ausnahme einer Bohrung (8) vollständig geschlossen und der Durchmesser der Bohrung (8) so bemessen ist, dass die Kurbelwelle bei ihrer Montage durch die vom Flansch (5, 5') umschlossene Öffnung hindurch in Schräglage mit ihrem steuerseitigen Ende in die Bohrung (8) eingeführt und dann in ihrer horizontalen Lage innerhalb der Lagerstühle (13) positioniert werden kann und
**dass** das Kurbelgehäuse (1, 1') außenseitig eine die Bohrung (8) auf der Steuerseite (7) vollumfänglich umgebende Dichtfläche (9) zur Zusammenwirkung mit einer korrespondierenden Dichtfläche des Gehäuses eines am Kurbelgehäuse (1, 1') anzubringenden Motoraggregats, insbesondere einer Ölpumpe (18), aufweist.

2. Kurbelgehäuse (1, 1') nach Anspruch 1,
**dadurch gekennzeichnet,**
**dass** in das Kurbelgehäuse (1, 1') ein einteilig mit diesem ausgebildetes Gehäuse (14, 14') eines Abgasrückführungskühlers integriert ist.

3. Mehrzylindermotor, insbesondere Dieselmotor, mit einem Kurbelgehäuse (1, 1') nach einem der vorangehenden Ansprüche.

## Claims

1. A crankcase (1, 1') cast in one piece, for a multi-cylinder engine (16), particularly a multi-cylinder diesel engine, having a mount (2) for a crankshaft that runs horizontally, as well as several cylinder bores (3), which has a completely circumferential, uninterrupted flange (5, 5') on its underside, for mounting an oil pan (17), and wherein, on assembly of the engine, the crankshaft is able to be introduced into the crankcase,
**characterized in that**
the crankcase (1, 1') is completely closed on its control side (7) that lies opposite the flywheel side, with the exception of a bore (8), and the diameter of the bore (8) is dimensioned so that the crankshaft can be introduced with its control-side end into the bore (8) through the opening surrounded by the flange (5, 5'), in an oblique position, during its assembly, and then can be positioned in its horizontal position within the bearing blocks (13), and that
the crankcase (1, 1') has a sealing surface (9) on the outside, which surrounds the bore (8) on the control side (7) over its complete circumference, to interact with a corresponding sealing surface of the housing of an engine unit, particularly an oil pump (18), to be affixed to the crankcase (1, 1').

2. The crankcase (1, 1') according to Claim 1,
**characterized in that**
a housing (14, 14') of an exhaust gas recirculation cooler constructed in one piece with the crankcase (1, 1') is integrated into the latter.

3. A multi-cylinder engine, particularly a diesel engine, having a crankcase (1, 1') according to one of the preceding claims.

## Revendications

1. Carter de moteur (1, 1') coulé en un seul tenant pour un moteur à plusieurs cylindres (16), notamment un moteur diesel à plusieurs cylindres, comportant un réceptacle (2) pour un vilebrequin s'étendant horizontalement ainsi que plusieurs alésages de cylindre (3), qui sur son côté inférieur présente une bride (5, 5') non interrompue, faisant complètement le tour de la circonférence pour monter un carter d'huile (17) et dans lequel le vilebrequin lors du montage du moteur peut être inséré dans le carter de moteur,
**caractérisé en ce que**
le carter de moteur (1, 1') est complètement fermé sur son côté de commande (7) en vis-à-vis du côté de volant à l'exception d'un alésage (8) et le diamètre de l'alésage (8) est dimensionné de telle sorte que le vilebrequin lors de son montage soit guidé à travers l'ouverture entourée par la bride (5, 5') en position oblique avec une extrémité du côté de commande dans l'alésage (8) et ensuite peut être positionné dans sa position horizontale à l'intérieur de la chaise de palier (13) et
**en ce que** le carter de moteur (1, 1') présente du côté extérieur une surface d'étanchéité (9) faisant intégralement le tour de l'alésage (8) sur le côté de commande (7) afin de coopérer avec une surface d'étanchéité correspondante du logement d'un groupe de moteur à monter sur le carter de moteur (1, 1'), notamment d'une pompe à huile (18).

2. Carter de moteur (1, 1') selon la revendication 1,
**caractérisé en ce que**
dans le carter de moteur (1, 1'), un logement (14, 14') réalisé en un seul tenant avec celui-ci d'un refroidisseur de réintroduction de gaz d'échappement est intégré.

3. Moteur à plusieurs cylindres, notamment moteur diesel, comportant un carter de moteur (1, 1') selon une des revendications précédentes.
